# EUROPEAN PATENT APPLICATION

(11) **EP 1 137 193 A2**
(43) Date of publication of application: **26.09.2001**
(21) Application number: 00125700.5
(22) Date of filing: 23.11.2000
(51) Int. Cl.: H04B 1/707

(54) **Method and circuit for delay profile measurement**

(30) Priority: 24.03.2000 JP 2000084368
(71) Applicant: MATSUSHITA ELECTRIC INDUSTRIAL CO., LTD., Kadoma-shi, Osaka 571-8501 (JP)
(72) Inventor: Yamada, Daisuke, Yokohama-shi, Kanagawa 236-0031 (JP)
(74) Representative: Grünecker, Kinkeldey, Stockmair & Schwanhäusser Anwaltssozietät

(57) **Abstract**

The CDMA communication delay profile measuring circuit of the present invention adaptively changes the amount of data to be subjected to in-phase additions according to the frequency of fading. A reception data string containing a pilot symbol is divided into a plurality of blocks. Then, while changing the number of blocks to be added little by little, data of a plurality of in-phase addition results are obtained. A power value of the reception signal corresponding to the data of each addition result is calculated. By comparing these power values, an optimal block addition count is calculated. Then, the power value is acquired based on the data included in the determined number of blocks.

## Description

### BACKGROUND OF THE INVENTION

### Field of the Invention

The present invention relates to a method and circuit for delay profile measurement for measuring a delay profile from a despread reception signal in a spread spectrum communication (CDMA communication).

### Description of the Related Art

In a CDMA communication, it is necessary to detect the number of paths of an arriving radio wave when a receiver carries out RAKE combining reception. The existence of valid paths available to RAKE combining can be made clear by measuring a delay profile.

One of the methods of measuring a delay profile is a method of calculating average power of a reception signal from the I component (in-phase component) and Q component (quadrature component) of a received QPSK-modulated signal (or more specifically a pilot symbol).

A pilot symbol is a known data string, which is inserted for synchronization acquisition (or synchronization follow-up).

The power of a reception signal is calculated by adding up the square of the I component and the square of the Q component of a reception signal, that is, by calculating I²+Q².

In this calculation, adding up a plurality of consecutive I component data (or Q component data) by a predetermined number and finding the square of the addition result improves the accuracy of power measurement rather than directly squaring the reception signal.

Noise superimposed on the reception signal exists at random positions. Therefore, adding up a predetermined amount of in-phase component data causes noise components to cancel out each other, which improves S/N.

When a method of carrying out a square operation after adding up a plurality of in-phase component data is used, the amount of data to be added is prefixed.

However, the level of a reception signal fluctuates depending on fading. When the fading cycle is smaller than the time width corresponding to the amount of data to be added, the reliability of the data to be added itself is low. Calculating reception power based on data with low reliability does not allow accurate power calculations.

For example, the probability of detecting peaks of noise and interference signal components will increase. Therefore, there is a high possibility of failing to accurately detect paths of the arriving radio wave. That is, the accuracy in measuring delay profiles will decrease.

The present invention has been implemented to solve such a problem and it is an object of the present invention to always allow accurate path detection without being affected by fading modes.

### SUMMARY OF THE INVENTION

The present invention adaptively changes the amount of data subjected to in-phase additions according to the frequency (cycle) of fading.

That is, when calculating consecutive in-phase data, the present invention acquires a plurality of data pieces by changing an addition count.

Then, based on each data piece, power of the reception signal (or ratio of power of the reception signal to power of noise) is calculated. Then, based on the calculated value and its time variation, an optimal in-phase addition count under the current fading is determined.

It is preferable to divide all data obtained by despreading and used for synchronization acquisition into a plurality of blocks and change the addition count of data using this block as a unit.

This allows the total amount of data subjected to in-phase addition (more specifically, time width corresponding to the total amount of data) to be drastically changed in steps according to the number of blocks to be added.

This allows a speedy comparison of the time width corresponding to the total amount of data to be added and the cycle of fading in the current reception environment.

### BRIEF DESCRIPTION OF THE DRAWINGS

The above and other objects and features of the invention will appear more fully hereinafter from a consideration of the following description taken in connection with the accompanying drawing wherein one example is illustrated by way of example, in which;
FIG.1 is a block diagram showing a configuration of a CDMA reception apparatus of the present invention;
FIG.2A is a drawing to explain division of received I and Q component data lines into blocks;
FIG.2B illustrates combinations of additions between blocks;
FIG.2C is a drawing to explain power calculation of a reception signal;
FIG.2D illustrates an example of a power value of the reception signal and variation of the power value on the time axis;
FIG.3A is a block diagram showing an example of a configuration of the in-phase addition count determination circuit in FIG.1;
FIG.3B is a block diagram showing another example of a configuration of the in-phase addition count determination circuit in FIG.1;
FIG.3C is a drawing to explain an example of a noise power measuring method;
FIG.4 is a flow chart showing a characteristic operation of the CDMA reception apparatus of the present invention; and
FIG. 5 is a drawing to explain a relationship between a fading frequency (cycle) and data count to be subjected to in-phase additions.

### DETAILED DESCRIPTION OF THE PREFERRED EMBODIMENTS

With reference now to the attached drawings, an embodiment of the present invention will be explained below.

### (Embodiment 1)

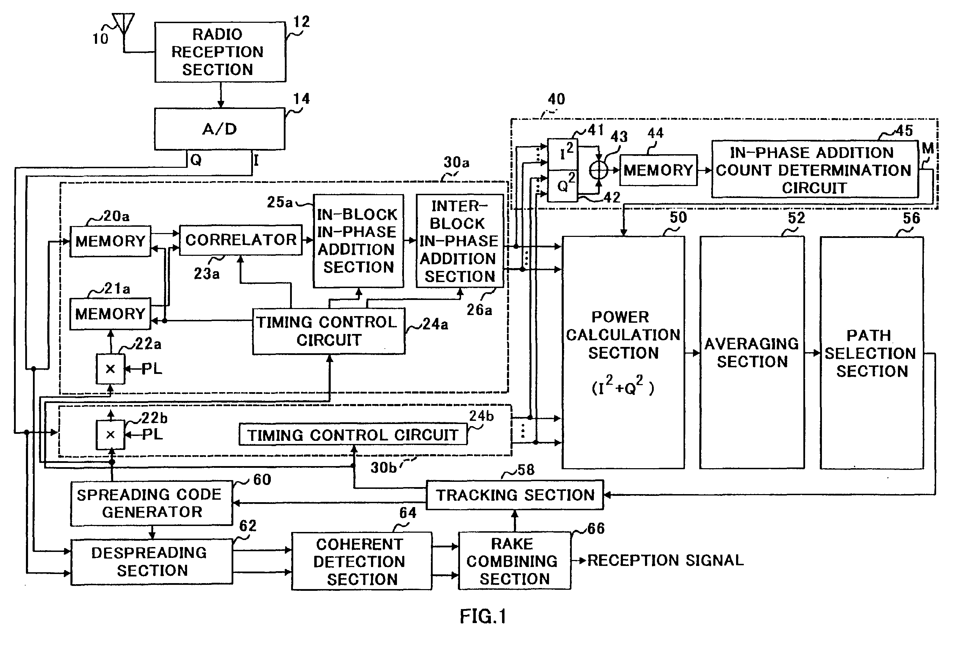

FIG.1 is a block diagram showing a configuration of a CDMA reception apparatus applying the present invention.

A feature of this CDMA reception apparatus is to adaptively change the number of in-phase additions according to the situation of fading in the delay profile measuring stage for synchronization acquisition (and synchronization follow-up).

First, an overall configuration of the CDMA reception apparatus will be explained.

A signal containing a known pilot signal is received by antenna 10. Ratio reception section 12 converts the frequency of the reception signal and amplifies the reception signal.

Then, the reception signal is subjected to oversampling by A/D converter 14. This A/D converter 14 outputs data of the I (in-phase) component and Q (quadrature) component.

As shown in FIG.1, the CDMA reception apparatus comprises in-phase addition section 30a, which carries out additions of I-component for every block and in-phase addition section 30b, which carries out additions of Q-component data for every block and in-phase addition count determination section 40.

In-phase addition sections 30a and 30b have an identical internal configuration.

The internal configuration of in-phase addition section 30b is described here partially omitted for brevity of illustration.

In-phase addition count determination section 40 in FIG.1 determines an in-phase addition count (M) in real time based on the power value of the reception signal. The in-phase addition count (M) in this embodiment expresses the number of blocks added.

The determined in-phased addition count (M) is given to power calculation section (I²+Q² calculation section) 50 of the reception signal.

A plurality of data pieces of different amounts of data added is input to power calculation section 50. Power calculation section 50 selects the data corresponding to the determined in-phase addition count (=M) from the data and calculates I²+Q² using the data to find power of the reception signal.

Averaging section 52 averages the power of the reception signal over a plurality of cycles.

Path selection section 56 detects a peak of the averaged reception power. This allows a delay profile to be measured. Therefore, it is possible to specify a path to be used for RAKE combining.

The timing at which the peak of power corresponding to each path appears is the reception timing of the CDMA reception apparatus.

To receive a signal at the timing detected in this way, tracking section 58 controls the operations of timing control circuits 24a and 24b in in-phase addition circuits 30a and 30b and spreading code generator 60.

While maintaining synchronization acquired in this way, despreading section 62 performs despreading. Then, coherent detection circuit 64 performs coherent detection and RAKE combining circuit 66 performs RAKE combining reception.

This is the overall configuration and operation of the reception apparatus.

Then, the configuration for adaptively changing the in-phase addition count according to a fading situation in the delay profile measuring stage will be explained more specifically.

A radio wave received by antenna 10 is amplified by the radio reception section and converted to a digital signal by A/D conversion section 14.

From A/D conversion section 14, the I and Q components of the QPSK-modulated reception data are output.

The following explanation is focused on the I component data. Similar processing is performed for the Q component, too.

The I component data converted to digital data is stored in memory 20a in in-phase addition section 30a.

On the other hand, memory 21a stores a result of multiplication of a spreading code (replica code) output from spreading code generator 60 by a known pilot signal (PL).

Multiplication of the spreading code (replica code) by the pilot signal (PL) is performed by multiplier 22a.

Correlator 23a in in-phase addition section 30a is configured by a matched filter, for example.

This correlator 23a detects a correlation between the reception data read from memory 20a (signal made up of a pilot symbol multiplied by a spreading code) and the data read from memory 21a.

Then, an addition is performed on the data output from correlator 23a.

This data addition processing is performed in two stages.

First, in-phase addition circuit 25a performs an addition on the data contained in one block.

Then, in-phase addition circuit 26a performs an addition between blocks. Operation timings of correlator 23a and in-phase addition circuits 25a and 26a are controlled by timing control circuit 24a.

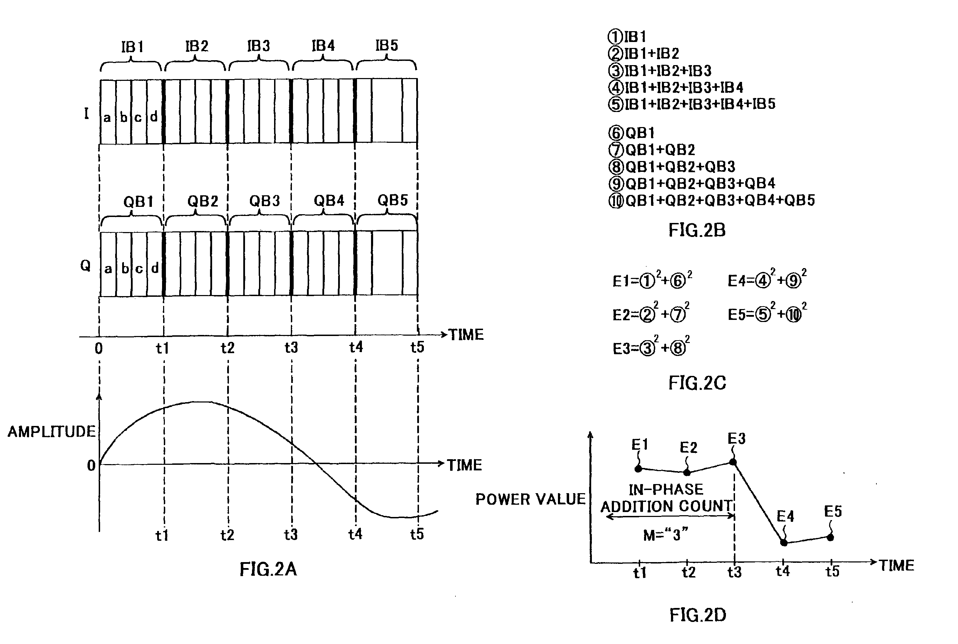

Here, the operations of in-phase addition circuits 25a and 26a are explained using FIG.2A and FIG.2B.

As shown in FIG.2A, the I and Q data lines are each divided into a plurality of blocks.

That is, in FIG.2A, the I data line is divided into five blocks of IB1 to IB5.

Likewise, the Q data line is divided into five blocks of QB1 to QB5.

One block consists of four data pieces of a to d. The value of each data piece (a to d) is either "+1" or "-1".

In-phase addition circuit 25a in FIG.1 adds up all data pieces (a to d) that belong to each block for every block (IB1 to IB5) shown in FIG.2A.

In-phase addition circuit 26a in FIG.1 performs additions while changing the number of blocks to be added for all combinations as shown in FIG.2B.

That is, additions ① to ⑤ shown in FIG.2B are performed.

For the Q component, additions ⑥ to 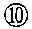 are performed likewise.

This is the processing content of in-phase addition circuits 25a and 26a.

Next, the processing to determine an optimal in-phase addition count using a result of an addition between blocks will be explained.

In-phase addition count determination section 40 in FIG.1 has square calculation circuits 41 and 42, adder 43, memory 44 and in-phase addition count determination circuit 45.

The data (I data) of results ① to ⑤ shown in FIG. 2B are input to square calculation circuit 41 and a square calculation (I²) is performed on each data piece.

Likewise, the data (Q data) of results ⑥ to 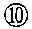 are input to square calculation circuit 42 and a square calculation (Q²) is performed on each data piece.

Then, the results of the corresponding square calculations are added up by adder 43 and the result is stored in memory 44.

That is, memory 44 stores data of E1 to E5 shown in FIG.2C. Data E1 to E5 are calculated as follows:
E1=① ²+ ⑥ ², E2= ② ²+ ⑦ ², E3= ③ ²+ ⑧ ², E4= ④ ²+ ⑨ ², E5= ⑤ ²+ 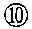 ²

E1 is a power value corresponding to one block (IB1 and QB1). Likewise, E2 to E5 are power values corresponding to 2 to 5 blocks.

In-phase addition count determination circuit 45 in FIG.1 compares power values (E1 to E5) shown in FIG.2D and detects a variation of each value on the time axis.

In FIG.2D, E3 is the largest in terms of a power value.

When focused on a variation of the power value on the time axis, E1 to E3 indicate similar values and are stable, while with E4 and E5 the power value drops drastically.

In this case, the values of E4 and E5 are assumed to have low reliability because of the influence of fading.

That is, as shown in the lower part of FIG.2A, the half cycle of fading (1/2 cycle) is likely to be shorter than a length corresponding to 5 blocks and longer than a length corresponding to 3 blocks.

Therefore, an optimal in-phase addition count (number of blocks added) is determined as "3" in this case. The data corresponding to the part after the half cycle of fading is not so reliable, and therefore not included in the addition targets . Of the remaining block counts, "1", "2" and "3", the largest number "3" is decided to be the number of blocks added.

That is, when the optimal in-phase addition count (here, the number of blocks added) is M, M is 3.

Here, the in-phase addition count is decided considering not only the power value itself, but also a variation of the power value on the time axis.

However, the present invention is not limited to this.

For example, a considerable improvement of reliability can also be expected by a method of selecting the highest power level.

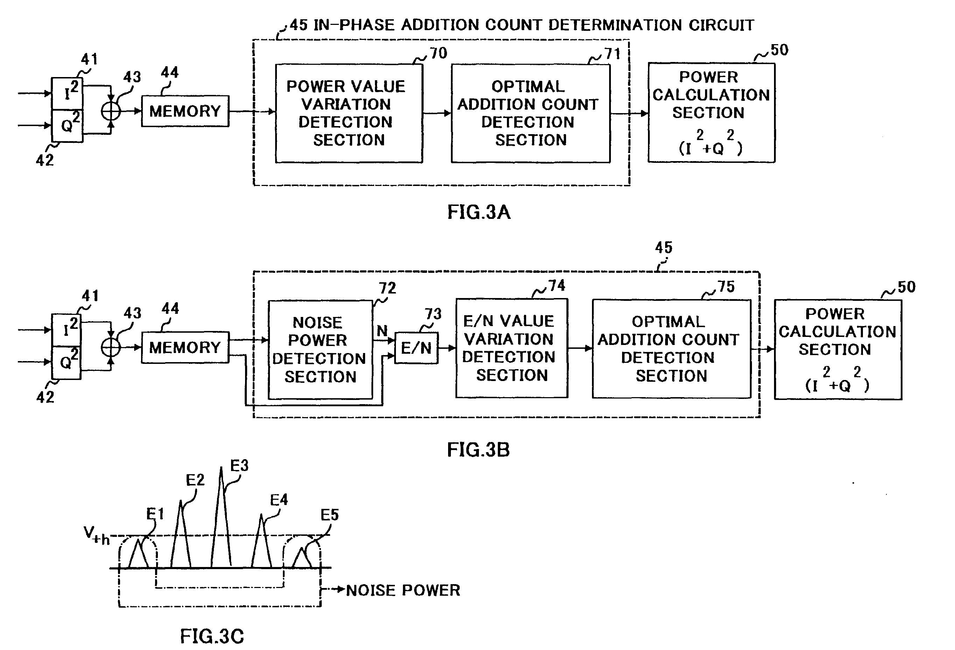

FIG.3A shows an example of a configuration of in-phase addition count determination circuit 45.

As shown in the figure, in-phase addition count determination circuit 45 includes power value variation detection circuit 70 and optimal addition count detection circuit 71 that detects an optimal in-phase addition count from the power value and the detected power value time variation.

The circuit 3A calculates a ratio (E/N) of power value (E) of the reception signal to noise value (N) and determines the in-phase addition count based on this. This improves reliability.

That is, according to the circuit in FIG.3A, even if the level of the reception signal indicates a peak instantaneously, when the noise level is also high, then it is possible to decide that the peak is likely to be a component attributable to noise. This makes it possible to detect an optimal in-phase addition count with higher accuracy.

FIG.3B shows another example of a configuration of in-phase addition count determination circuit 45.

In-phase addition count determination circuit 45 in FIG.3B includes noise power detection circuit 72 that detects noise power, E/N measurement circuit 73 that finds a ratio (E/N) of the power value (E) of the reception signal to the power value of noise (N), variation detection circuit 74 that detects a variation of the E/N value on the time axis and optimal addition count detection circuit 75 that detects an optimal in-phase addition count from the E/N value and the detected time variation of the E/N value.

FIG.3C shows the method of calculating noise power.

That is, of the power values of the reception signal E1 to E5, the values greater than threshold Vth (E2, E3 and E4) are considered to be the power values of the reception signal corresponding to each path for RAKE combining.

Then, the power values lower than threshold Vth (E1 and E5) are averaged and considered as noise power (N).

E/N value variation detection circuit 74 compares values E2/N, E3/N and E4/N on the time axis. Then, optimal addition count determination detection circuit 75 detects an optimal in-phase addition count (M).

In this way, adaptively changing the in-phase addition count improves path detection accuracy (accuracy of delay profile measurement). A specific example is shown below.

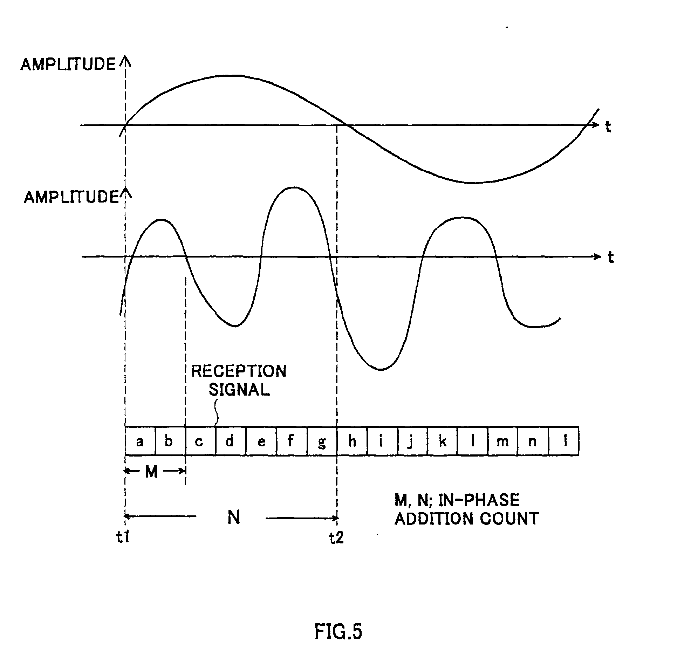

Consider two fading signals having different cycles as shown in FIG.5. When fading has a long cycle with respect to an in-phase reception signal string (a to 1), the in-phase addition count is set to N (=7).

On the other hand, when fading has a short cycle, the in-phase addition count is set to M (=2), that is, a smaller in-phase addition count is used.

This improves the reliability of the data, which forms the basis of power calculation of the reception signal. Thus, the accuracy of path detection improves.

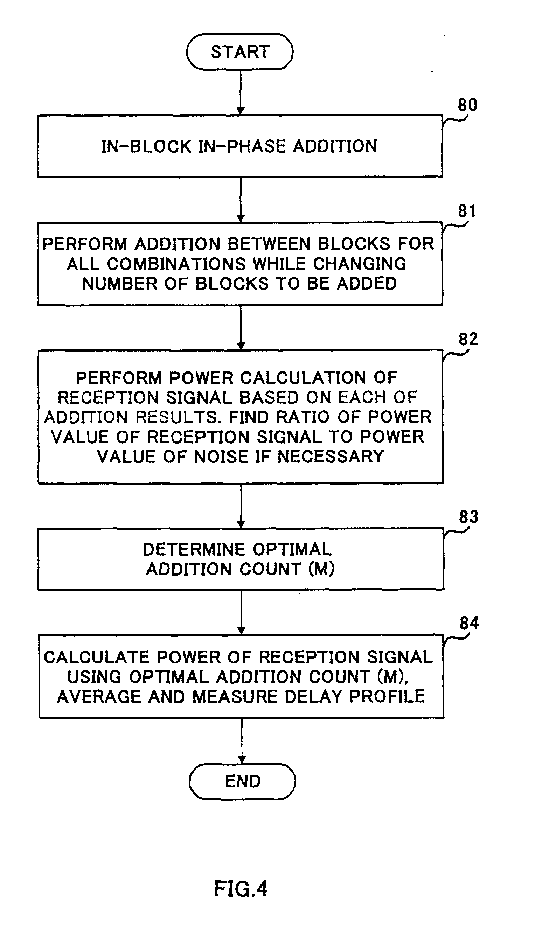

The procedure of the characteristic processing of the present invention explained above is summarized as shown in FIG.4.

That is, an in-phase addition is performed for every block (step 80).

Then, while changing the number of blocks to be added, additions between blocks are performed for all combinations (step 81).

Then, power calculation of the reception signal is performed based on each addition result. If necessary, the ratio (E/N) of the power value of the reception signal to the power value of noise is calculated (step 82).

Then, an optimal addition count (M) is determined by comparing power values, etc. or considering variations on the time axis (step 83), too.

Then, an in-phase addition is carried out using the obtained optimal addition count and the power of the reception signal is calculated, then averaged and a delay profile is measured (step 84).

As explained above, the present invention adaptively changes the amount of data to be added of the I and Q components in the synchronization acquisition processing according to the frequency of fading.

This prevents a peak of a noise/interference component from being erroneously detected as a reception path. This also allows the accuracy of path detection (delay profile measurement) to be improved.

The present invention is not limited to the above described embodiments, and various variations and modifications may be possible without departing from the scope of the present invention.

This application is based on the Japanese Patent Application No.2000-84368 filed on March 24, 2000, entire content of which is expressly incorporated by reference herein.

## Claims

1. A delay profile creation method in a CDMA communication comprising the steps of:
performing additions on a plurality of in-phase component data with different amounts of data to be added and acquiring data of their respective addition results;
detecting power values of a reception signal or a ratio of the power of the reception signal to the power of noise based on the acquired data; and
determining an optimal in-phase addition count by comparing said power values detected or between the values of said ratio or detecting a variation of those values on the time axis and thereby determining an optimal in-phase addition count under current fading.

2. A delay profile measurement method that receives a CDMA-based signal containing a known symbol, despreads the signal, adds up a plurality of consecutive in-phase component data and measures a delay profile using the addition result and calculating power of the reception signal, comprising the steps of:
dividing a data string of. a part containing said known symbol after despreading into n (n is a natural number of 2 or greater) blocks;
acquiring data resulting from n additions such as an addition of data contained in one divided block, an addition of data contained in 2 blocks, ... an addition of data contained in (n-1) blocks and an addition of data contained in n blocks;
calculating power of the reception signal based on data of the addition results;
comparing between n power values of the reception signal calculated and thereby adaptively determining the number of blocks added; and
measuring a delay profile based on the power value of the reception signal corresponding to the determined number of blocks.

3. The delay profile measurement method according to claim 2, wherein the step of comparing said n power values of the reception signal calculated and thereby adaptively determining the number of blocks to be added includes the step of detecting the largest one of said n reception power values and detecting the number of blocks corresponding to the detected largest power value.

4. The delay profile measurement method according to claim 2 , wherein the step of comparing said n power values of the reception signal calculated and thereby adaptively determining the number of blocks to be added includes the step of detecting a variation of said n power values of the reception signal on the time axis.

5. The delay profile measurement method according to claim 2, wherein the step of comparing said n power values of the reception signal calculated and thereby adaptively determining the number of blocks to be added includes the step of finding a ratio of a plurality of at least higher samples among said n power values of the reception signal to the power of noise.

6. A delay profile measuring circuit that receives a CDMA-based signal containing a known symbol, adds up a plurality of consecutive in-phase component data after despreading and measures a delay profile using the addition result and calculating power of the reception signal, comprising:
an in-block in-phase addition section(25a) that divides a data string of a part containing said known symbol after despreading into n (n is a natural number of 2 or greater) blocks and adds up in-phase data for every block;
an inter-block addition section(26a) that executes in-phase additions between blocks and thereby acquires a total of n addition results as a result of an in-phase addition of a single block, a result of an in-phase addition between 2 blocks, ... a result of an in-phase addition between (n-1) blocks and a result of an in-phase addition between n blocks;
an in-phase addition count determination section (45) that calculates power values of the reception signal based on each of said n addition results output from this inter-block addition means, compares between the calculated n power values of the reception signal and thereby adaptively determines the number of blocks to be added; and
a delay profile measuring section(50,52) that measures a delay profile from the reception power calculated based on the addition result of in-phase data corresponding in number with the determined number of blocks.

7. A CDMA reception apparatus that receives a CDMA-based signal containing a known bit, comprising:
a despreading section(21a,22a,23a,60) that despreads a reception signal;
an in-block in-phase addition section(25a) that divides a data string of a part containing said known symbol after despreading into n (n is a natural number of 2 or greater) blocks and adds up in-phase data for every block;
an inter-block addition section(26a) that executes in-phase additions between blocks and thereby acquires a total of n addition results as a result of an in-phase addition of a single block, a result of an in-phase addition between 2 blocks, ... a result of an in-phase addition between (n-1) blocks and a result of an in-phase addition between n blocks;
an in-phase addition count determination section (45) that calculates power values of the reception signal based on each of said n addition results output from this inter-block addition means, compares between calculated n power values of the reception signal and thereby adaptively determines the number of blocks to be added;
a delay profile measuring section(50,52) that measures a delay profile from the reception power calculated based on the addition result of in-phase data corresponding in number with the determined number of blocks;
a path selection section(56) that detects paths of higher number samples with high power level from the output signal of said delay profile measuring section; and
RAKE combining section(66) that performs despreading at timing corresponding to the paths selected by said path selection section and performs RAKE combining.

8. A CDMA base station apparatus comprising the CDMA reception apparatus according to claim 7.
